# EUROPÄISCHE PATENTANMELDUNG

(11) **EP 3 995 237 A1**
(43) Veröffentlichungstag der Anmeldung: **11.05.2022**
(21) Anmeldenummer: 20205880.6
(22) Anmeldetag: 05.11.2020
(51) Int. Cl.: B22F 10/366, B22F 5/00, B33Y 50/02, B33Y 80/00, F01D 9/00, B22F 10/18, B22F 10/25, B22F 10/28, B22F 3/11

(54) **BESTRAHLUNGSSTRATEGIE FÜR DIE ADDITIVE HERSTELLUNG EINES BAUTEILS UND ENTSPRECHENDES BAUTEIL**

(71) Anmelder: Siemens Energy Global GmbH & Co. KG, 81739 München (DE)
(72) Erfinder: Albert, Johannes, 13357 Berlin (DE); Geisen, Ole, 14057 Berlin (DE); Hermann, Oliver, 12437 Berlin (DE)

(57) **Zusammenfassung**

Es wird ein Verfahren zum Bereitstellen von Herstellungsanweisungen für die additive Herstellung eines Bauteils (10) angegeben, wobei Aufbauvektoren (Vr, Vc) für eine additiv herzustellende Schicht (L) für das Bauteil (10) ein zumindest teilweise rotationssymmetrisches Muster bildend, definiert werden, und wobei einzelne Aufbauvektoren (Vr) des Musters radial verlaufen und zu einem gemeinsamen Mittelpunkt (M) konvergieren. Weiterhin werden ein entsprechend hergestelltes Bauteil (10) sowie ein Computerprogrammprodukt angegeben.

## Beschreibung

Die vorliegende Erfindung betrifft ein Verfahren zum Bereitstellen von Herstellungsanweisungen für die additive Herstellung eines Bauteils sowie ein entsprechend hergestelltes Bauteil und ein entsprechendes Computerprogrammprodukt.

Das Bauteil ist vorzugsweise für den Einsatz im Heißgaspfad einer Gasturbine, wie einer stationären Gasturbine, vorgesehen. Besonders bevorzugt betrifft die Bauteilstruktur eine Komponente einer Brennkammer bzw. ein Resonatorbauteil wie einen Helmholtz-Resonator oder einen Teil davon. Alternativ kann es sich bei dem Bauteil um ein anderes kühlbares und/oder teilweise poröses Bauteil handeln, beispielsweise eines, das für den Einsatz in der Automobilität oder im Luftfahrtsektor Anwendung findet.

Vorzugsweise ist das Bauteil eine zu kühlende Komponente, einer Gasturbine. Dazu weist das Bauteil vorzugsweise eine maßgeschneiderte Durchlässigkeit oder Permeabilität für ein entsprechendes Kühlfluid, beispielsweise Kühlluft, auf.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen, Kriechbelastung und thermomechanischer Ermüdung, verbessert.

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Additive Herstellungsverfahren, umgangssprachlich auch mit "3D-Druck" bezeichnet, wie sie im Kontext der vorliegenden Erfindung besonders vorteilhaft sind, umfassen beispielsweise als Pulverbettverfahren das selektive Laserschmelzen (SLM) oder Lasersintern (SLS), oder das Elektronenstrahlschmelzen (EBM). Diese Verfahren zeichnen sich durch eine große Formgebungsfreiheit und eine besonders vorteilhafte Güte bei der Abbildung von filigranen herzustellenden Strukturmerkmalen aus.

Weiterhin kann die vorliegende Erfindung im Rahmen von sogenannten Schmelzschlichtungsverfahren (FDM: englisch für "Fused Deposition Modeling") angewendet werden. Bei diesen Verfahren wird, anders als bei einem Pulverbett, ähnlich wie bei konventionellen Druckern, ein Punkte- oder Bahnenraster aufgebaut, wobei eine Materialverfestigung dann beispielsweise durch Verflüssigung und Erstarrung eines draht- oder filamentförmigen Kunststoff- oder Wachsmaterials durch Erwärmung durch eine Düse extrudiert und dann nach einer entsprechenden Abkühlung an der gewünschten Position auf der Arbeitsebene verfestigt. Für einen Materialauftrag wird hier üblicherweise die Arbeitsebene sukzessive verschoben, um schichtweise eine Struktur aufzubauen. Eine Schichtdicke kann bei diesen Verfahren beispielsweise im Submillimeterbereich liegen. Und selbstverständlich können grundsätzlich Voll- und Hohlkörper gefertigt werden. Auch der additive Aufbau von Metallen ist über dieses Konzept möglich, indem ein Rohmaterial beispielsweise wachsgebunden bereitgestellt und nach der Extrusion ein Grünling erzeugt wird, der nachfolgend wärmebehandelt werden kann.

Auch sogenannte Laser cladding (LMD: englisch für Laser Metal Deposition") oder Laserauftragschweiß-Verfahren zählen zu den additiven Methoden, in welchen die Lösungen der vorliegenden Erfindung zur Verbesserung des Aufbaus und der Bauteilqualität angewendet werden können. Bei diesen Verfahren wird ein Werkstück beispielsweise durch einen Oberflächenauftrag mittels Aufschmelzen und gleichzeitigem Aufbringen eines Rohmaterials aufgebaut. Das Rohmaterial kann beispielweise in Pulverform über eine Düse oder auch über einen Schweißdraht bereitgestellt werden. Das (selektive) Verfestigen dieses Materials erfolgt vorzugsweise im gesteuerten Fokus eines Hochleistungslaser. Im Gegensatz beispielsweise zu pulverbett-basierten Verfahren, werden hier meist große Bauteile auch aus Hochleistungswerkstoffen hergestellt, bearbeitet oder beschichtet.

Ein Verfahren zum selektiven Laserschmelzen ist hingegen bekannt aus WO 2020/030461 A1.

Additive Fertigungsverfahren (englisch: AM für "additive manufacturing") haben sich weiterhin als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann.

Eine CAD-Datei oder ein Computerprogrammprodukt, kann beispielsweise als (flüchtiges oder nicht-flüchtiges) Speichermedium, wie z.B. eine Speicherkarte, ein USB-Stick, eine CD-ROM oder DVD, oder auch in Form einer herunterladbaren Datei von einem Server und/oder in einem Netzwerk bereitgestellt oder umfasst werden. Die Bereitstellung kann weiterhin zum Beispiel in einem drahtlosen Kommunikationsnetzwerk durch die Übertragung einer entsprechenden Datei mit dem Computerprogrammprodukt erfolgen. Ein Computerprogrammprodukt kann Programmcode, Maschinencode bzw. numerische Steuerungsanweisungen, wie G-Code und/oder andere ausführbare Programmanweisungen im Allgemeinen beinhalten.

Das Computerprogrammprodukt kann weiterhin Geometriedaten oder Konstruktionsdaten in einem dreidimensionalen Format oder als CAD-Daten enthalten bzw. ein Programm oder Programmcode zum Bereitstellen dieser Daten umfassen.

Die Herstellung von Gasturbinenschaufeln mittels der beschriebenen pulverbett-basierten Verfahren (LPBF englisch für "Laser Powder Bed Fusion") ermöglicht vorteilhaft die Implementierung von neuen Geometrien, Konzepten, Lösungen und/oder Design, welche die Herstellungskosten bzw. die Aufbau- und Durchlaufzeit reduzieren, den Herstellungsprozess optimieren und beispielsweise eine thermo-mechanische Auslegung oder Strapazierfähigkeit der Komponenten verbessern können.

Auf konventionelle Art, beispielsweise gusstechnisch, hergestellte Schaufelkomponenten, stehen der additiven Fertigungsroute beispielsweise hinsichtlich ihrer Designfreiheit und auch in Bezug auf die erforderliche Durchlaufzeit und den damit verbundenen hohen Kosten sowie dem fertigungstechnischen Aufwand deutlich nach. Durch die Festlegung von neuartigen Herstellungs-, Auftrags- oder Bestrahlungsstrategien lassen sich die additiven "3D-Druckverfahren" immer noch deutlich weiterentwickeln, und insbesondere vordefinierte maßgeschneiderte Struktur-, Porositäts-, oder Permeabilitätseigenschaften einstellen, welche bisher weder durch konventionelle Techniken noch durch additive Herstellungsansätze des Standes der Technik erreichbar sind.

Beispielsweise können Gitterstrukturen und/oder poröse Strukturen durch eine gezielt gewählte Anordnung von Bestrahlungs- oder Materialauftragsvektoren in regelmäßigen Abständen und reproduzierbar generiert werden. Die Abstände und die Orientierung der Vektoren kann dabei bereits während der Festlegung des Bestrahlungs- oder Auftragsmusters für eine vorbestimmte Durchlässigkeit und/oder Stabilität der aufgebauten Struktur durchgeführt werden.

Konventionell bekannte oder voreingestellte Bestrahlungsstrategien, umfassend beispielsweise Standardeinstellungen von gängigen AM-Herstellungsanlagen, wie mäanderförmige, streifenförmige oder schachbrettartige Bestrahlungen, sind dafür nur bedingt geeignet. Die genannten Ansätze führen unweigerlich zu strukturellen Vorzugsrichtungen, welche beispielsweise für rotationssymmetrische Bauteile, die symmetrische oder umlaufend homogene Eigenschaften benötigen, nachteilhaft sind. Auch mechanische Eigenschaften, wie die Festigkeit der Struktur, sind dann dementsprechend nicht umlaufend homogen oder gleichmäßig.

Auch eine Rotation von sogenannten Schraffur-Bestrahlungsvektoren nach einer jeden aufgebauten Schicht liefert hier insbesondere bei pulverbett-basierten Verfahren noch kein zufriedenstellendes Ergebnis, da sich eine Gleichmäßigkeit oder "pseudohomogene" mechanische Eigenschaften erst nach einer bestimmten Anzahl von Schichten einstellen können.

Es ist daher eine Aufgabe der vorliegenden Erfindung, Lösungen für diese Verbesserungen bereitzustellen und die additive Fertigung insgesamt hinsichtlich der zu erzielenden Reproduzierbarkeit und Strukturgüte von Bauteilen weiter zu verbessern und deren Industrialisierung oder Massenproduktion zu etablieren.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Bereitstellen von Herstellungsanweisungen für die additive Herstellung eines Bauteils, wobei Aufbauvektoren, insbesondere Materialauftrags- oder Bestrahlungsvektoren, für eine oder eine jede additiv herzustellende Schicht für das Bauteil ein zumindest teilweise rotationssymmetrisches Muster bildend, definiert werden, und wobei einzelne Aufbauvektoren des Musters radial verlaufen und zu einem gemeinsamen Mittelpunkt, Zentrum oder Flächenschwerpunkt konvergieren, oder dahin entsprechend zusammenlaufen. Das Verfahren kann insbesondere eine die eigentliche Bestrahlungs- oder Aufbaustrategie festlegen und Teil eines CAM-Verfahrens sein, welches vorbereitend für die Herstellung des eigentlichen Bauteils angewendet oder durchgeführt werden muss. Bereits durch die Festlegung der Aufbaustrategie werden also die technischen Strukturmerkmale des Bauteils definiert.

Der Ausdruck "rotationssymmetrisch" soll vorliegend insbesondere bedeuten, dass eine Form oder Figur gleichbleibend ist oder unverändert wird, wenn sie auf sich abgebildet werden kann, indem sie um einen oder mehrere bestimmte Winkel um einen zentralen Punkt gedreht wird.

In einer Ausgestaltung werden Aufbauvektoren mit zunehmendem radialen Abstand vom Mittelpunkt verzweigt, wenn ein vordefinierter, maximaler Abstand benachbarter Vektoren überschritten wird. Dabei kann so eine Verzweigung mit zunehmendem Abstand vom Mittelpunkt auch mehrfach vorgesehen werden, um die Vektoren für das Strukturergebnis der Schicht nicht zu weit auseinander laufen zu lassen.

In einer Ausgestaltung wird nur eine vorbestimmte Anzahl von Verfestigungsvektoren, also nicht alle, durch den Mittelpunkt verlaufend definiert und die restlichen Vektoren in einer regelmäßigen, beispielsweise rotationsinvarianten oder symmetrischen Anordnung radial weiter außen erst eingesetzt, um einen geeigneten Abstand der Aufbauvektoren einzuhalten bzw. zu gewährleisten.

Der Ausdruck "geeignet" im Kontext des genannten Abstands soll vorliegend bedeuten, dass die Aufbauvektoren insbesondere nicht zu nah aneinander oder zu eng, aber auch nicht zu weit voneinander entfernt angeordnet werden. Eine zu enge Dichte von Vektoren für eine herzustellende Bauteilschicht kann insbesondere dazu führen, dass Porosität oder Permeabilitätseigenschaften der Struktur nicht mehr ausreichend ausgebildet werden, ein zu umfangreiches Umschmelzen eines Ausgangsstoffes stattfindet und/oder der Prozess zu langsam abläuft. Demgegenüber kann ein zu großer Abstand von angeordneten Vektoren die Formstabilität der Struktur insgesamt beeinträchtigen.

In einer Ausgestaltung wird eine Geometrie des additiv herzustellenden Bauteils derart gewählt, dass der Mittelpunkt des Musters innerhalb eines nicht zu verfestigenden Bereichs der entsprechenden Schicht, beispielsweise einer Bohrung oder einem Hohlraum des Bauteils, liegt. Diese Ausgestaltung ist besonders zweckmäßig, aber nicht exklusiv, bei rotationssymmetrischen Bauteilen, deren Mittelpunkt oder Symmetriezentrum innerhalb dieser Bohrung/des Mittelpunkts liegt.

In einer Ausgestaltung wird das Muster nicht vollständig radialsymmetrisch ausgebildet, sondern beispielsweise nur teilweise rotationssymmetrisch. Mit anderen Worten soll eine Invarianz gegenüber einer Rotation oder Drehung nur bei bestimmten Winkeln, nicht aber bei allen, gegeben sein. Auch kann dies bedeuten, dass nur bestimmte Winkelsektoren, beispielsweise in Bezug auf einen Polarwinkel in der Schichtebene, eine Rotationsinvarianz aufweisen, wohingegen das für andere Sektoren nicht der Fall sein soll. Gemäß dieser Ausgestaltung werden beispielsweise einzelne Aufbauvektoren, beispielsweise gemäß einer Kontur der jeweils herzustellenden Bauteilschicht, unterschiedlich lang ausgedehnt. Diese Ausdehnung kann beispielsweise an die jeweils zu verfestigende Querschnittsfläche der Schicht angepasst werden, sodass sich die besagten Aufbauvektoren von dem Mittelpunkt bis hin zu einer Kontur des Bauteils erstrecken.

In einer Ausgestaltung wird ein Energieeintrag für eine Materialverfestigung gemäß den Aufbauvektoren vom Mittelpunkt bis radial nach außen erhöht, um breitere Materialaufträge, - im Falle von pulverbett-basierten Strahlschmelzverfahren - Schmelzbäder, zu erzielen. Dadurch kann der resultierende Abstand zwischen den Auftragsbahnen bzw. Schmelzbädern vorteilhafterweise konstant oder innerhalb eines vorbestimmten Toleranzbereichs gehalten werden.

Durch diese Ausgestaltung (aber auch durch weitere vorliegend beschriebene Ausgestaltungen) kann vorteilhafterweise eine gezielte Struktur einer jeden Bauteilschicht, wie beispielsweise eine bestimmte Permeabilität oder Durchlässigkeit für ein Kühlfluid "eingestellt" werden. Allgemein können insbesondere für rotationssymmetrische Strukturen homogene und/oder isotope Materialeigenschaften erzielt werden, welche dann während des Betriebs des fertigen Bauteils beispielsweise bestimmte Belastungen oder Kraftflüsse aufnehmen können und so per se zu verbesserten Bauteilen führen.

In einer Ausgestaltung wird das Muster im Rahmen eines CAM-Verfahrens ("Computer Aided Manufacturing") definiert. In einem so genannten CAM-Verfahren können zudem weitere den Herstellungsprozess vorbereitende Maßnahmen durchgeführt werden, welche nicht zwingend Teil der vorliegenden Lösung sind, wie beispielsweise eine Schichtunterteilung der CAD-Datei.

In einer Ausgestaltung werden die Aufbauvektoren derart definiert, dass gemäß diesen aufgebaute Materialauftragsbahnen oder Schmelzbäder in der besagten Schicht frei von Überlapp oder Überlappungen sind, um im fertigen Bauteil eine gezielte Porosität, Permeabilität oder Durchlässigkeit für ein Kühlfluid, zu bewirken. Gemäß dieser Ausgestaltung kann ein struktureller Zusammenhalt der aufgebauten Struktur dann erst durch eine auf die genannte Schicht folgende Schicht gewährleistet werden, sodass das Bauteil insgesamt formstabil ausgestaltet wird.

In einer Ausgestaltung werden für eine weitere, auf die besagte Schicht folgende, Bauteilschicht weitere Aufbauvektoren definiert, welche relativ zu denen der darunterliegenden (besagten) Schicht verdreht und/oder radial versetzt werden. Gemäß dieser Ausgestaltung kann mit Vorteil eine Durchströmung des Bauteils entlang seiner Aufbau- oder Verfestigungsrichtung, beispielsweise der vertikalen z-Richtung bzw. leicht schräg zu dieser erzielt werden. Auch diese Ausgestaltung ist zweckmäßig und vorteilhaft für die Ausbildung einer gezielten Porosität (siehe oben).

In einer Ausgestaltung werden für die weitere, auf die erstgenannte Schicht folgende, Bauteilschicht weitere Aufbauvektoren definiert (siehe oben), welche konzentrisch verlaufen und die Aufbauvektoren der darunterliegenden (ersten) Schicht kreuzen. Auch durch diese Ausgestaltung kann mit Vorteil eine homogene Durchströmbarkeit des Bauteils erzielt werden.

In einer Ausgestaltung sind die Aufbauvektoren Bestrahlungsvektoren, wobei das Muster für alle oder fast alle Schichten des Bauteils entsprechend einer vorbestimmten oder gewünschten Geometrie definiert wird, und das Bauteil anschließend entsprechend durch ein pulverbett-basiertes additives Herstellungsverfahren, insbesondere selektives Laserschmelzen oder Elektronenstrahlschmelzen, aufgebaut wird. Gemäß dieser Ausgestaltung können die bekannten Vorteile dieser Verfahren genutzt und weiterhin noch verbessert werden.

In einer Ausgestaltung sind die Aufbauvektoren Materialauftragsvektoren, wobei das Muster für alle oder fast alle Schichten des Bauteils entsprechend einer vorbestimmten oder gewünschten Geometrie definiert wird, und das Bauteil anschließend entsprechend durch ein Auftragschweiß-Verfahren oder ein Schmelzschichtungsverfahren (siehe oben) aufgebaut wird. Gemäß dieser Ausgestaltung können mit Vorteil die Vorzüge der hier genannten Verfahren genutzt werden.

In einer Ausgestaltung ist die Struktur des (fertig hergestellten) Bauteils insgesamt strukturell zusammenhängend. Diese Ausgestaltung ist insbesondere für formstabile Bauteile notwendig.

Ein weiterer Aspekt der vorliegenden Erfindung betrifft ein Bauteil, welches gemäß dem beschriebenen Verfahren herstellbar oder hergestellt ist, wobei das Bauteil für den Einsatz im Heißgaspfad einer Gasturbine vorgesehen ist, insbesondere als Resonator- bzw. Dämpferbauteil.

In einer Ausgestaltung ist das Bauteil eine zu kühlende Komponente oder ein Komponententeil des Heißgaspfades einer Strömungsmaschine, wie einer stationären Gasturbine, und wobei die Struktur des Bauteils entlang einer Durchströmungsrichtung für die Kühlung, die genannte Richtung umlaufend, invariante Permeabilität- oder Strömungseigenschaften aufweist.

Ein weiterer Aspekt der vorliegenden Erfindung betrifft ein Computerprogramm bzw. Computerprogrammprodukt, umfassend Befehle, die bei der Ausführung eines entsprechenden Programms durch einen Computer, beispielsweise zur Steuerung der Bestrahlung oder des Materialauftrags in einer additiven Herstellungsanlage, diesen veranlassen, die Vektoren und das Muster wie beschrieben zu definieren.

Ausgestaltungen, Merkmale und/oder Vorteile, die sich vorliegend auf das Verfahren zum Bereitstellen der Herstellungsanweisungen bzw. die additiven Herstellungsverfahren beziehen, können ferner das Computerprogrammprodukt oder das entsprechend hergestellte Bauteil direkt betreffen, und umgekehrt.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Weitere Einzelheiten der Erfindung werden nachfolgend anhand der Figuren beschrieben.
Figur 1 zeigt eine schematische Prinzipdarstellung eines additiven Herstellungsverfahrens.
Figur 2 deutet anhand von mehreren Darstellungen Aufbauvektoren an, gemäß denen eine Struktur für ein Bauteil schichtweise additiv aufgebaut werden kann.
Figur 3 deutet schematisch oder virtuell einen Bauteilquerschnitt mit beispielhaften Aufbauvektoren und eine Durchströmungsrichtung an.
Figur 4 deutet schematisch verdrehte Muster von Aufbauvektoren in aufeinanderfolgend zu verfestigenden Schichten für ein Bauteil an.
Figur 5 zeigt eine schematische Aufsicht auf ein erfindungsgemäßes Aufbau- oder Bestrahlungsmuster.
Figur 6 deutet anhand mehrerer aufeinander folgend aufzubauender Bauteilschichten Aufbauvektoren an.
Figur 7 zeigt eine Tabelle, andeutend eine Aufbaustrategie von Material für verschiedene herzustellende Bauteilschichten.

Die Figuren 8 bis 18 deuten - ähnlich zu den Figuren 5 und 6 - weitere Details für ein erfindungsgemäßes Aufbaumuster an.

In den Ausführungsbeispielen und Figuren können gleiche oder gleichwirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

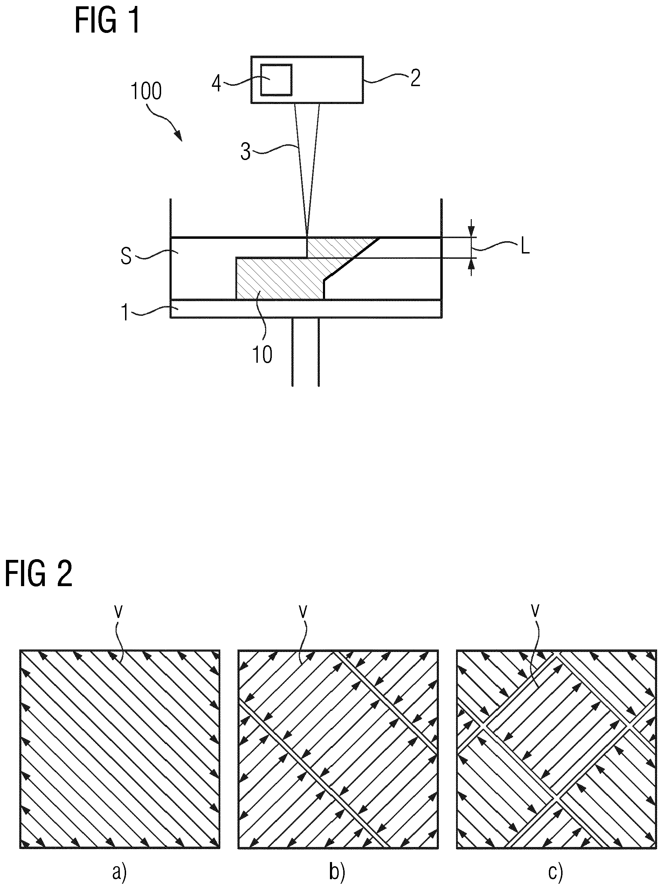

Die Figur 1 deutet anhand einer vereinfacht dargestellten Herstellungsanlage 100 Schritte eines additiven Herstellungsprozesses eines Bauteils 10 an.

Die Herstellungsanlage 100 kann als LPBF-Anlage und für den additiven Aufbau von Bauteilen oder Komponenten aus einem Pulverbett, insbesondere für selektives Laserschmelzen, ausgestaltet sein. Die Anlage 100 kann im Speziellen auch eine Anlage zum selektiven Lasersintern oder Elektronenstrahlschmelzen betreffen. Entsprechend weist die Anlage eine Bauplattform 1 auf. Auf der Bauplattform 1 wird ein additiv herzustellendes Bauteil 10 schichtweise aus einem Pulverbett hergestellt. Letzteres wird dann entsprechend durch ein Pulver (nicht explizit gekennzeichnet) in einem Bauraum S gebildet. Gemäß dieser Ausgestaltung wird das Pulver vorzugsweise über eine Rakel (ebenfalls nicht explizit gekennzeichnet) schichtweise auf der Bauplattform 1 verteilt.
Nach dem Auftragen einer jeden Schicht L aus Pulver mit einer Schichtdicke L werden gemäß der vorgegebenen Geometrie des Bauteils 10 selektiv Bereiche der Schicht L mit einem Energiestrahl 5, beispielsweise einem Laser oder Elektronenstrahl, von einer Bestrahlungseinrichtung 2 aufgeschmolzen und anschließend verfestigt. Nach jeder Schicht L wird die Bauplattform 1 dann vorzugsweise um ein der Schichtdicke L entsprechendes Maß abgesenkt. Die Dicke L beträgt üblicherweise lediglich zwischen 20 und 40 µm, so dass der gesamte Prozess leicht eine Anzahl von Tausenden bis hin zu mehreren Zehntausend Schichten erfordert.

Gemäß einer alternativen Ausgestaltung kann die Anlage aber auch eine Einrichtung bzw. einen entsprechenden "3D-Drucker" zum sogenannten Schmelzschichten (FDM oder auch FFF für "Fused Filament Fabrication" genannt) oder beispielsweise Laserauftragschweißen bezeichnen. Gemäß dieser Ausgestaltung wird das Bauteil 10 vorzugsweise ebenfalls durch selektiven Materialauftrag schichtweise gebildet, wobei ein Ausgangsmaterial jedoch durch eine Düse (vgl. ebenfalls Bezugszeichen 2) extrudiert und damit ein Materialauftrag (vgl. ebenfalls Bezugszeichen 5) erzielt werden kann.

Die Geometrie des Bauteils 10 wird in beiden Fällen üblicherweise durch eine CAD-Datei ("Computer-Aided-Design") festgelegt. Nach dem Einlesen einer solchen Datei in die Herstellungsanlage 100 erfordert der Prozess anschließend zunächst die Festlegung einer geeigneten Bestrahlungsstrategie beispielsweise durch Mittel des CAM ("Computer-Aided-Manufacturing"), wodurch auch ein Aufteilen der Bauteilgeometrie in die einzelnen Schichten erfolgt. Dies kann durch einen entsprechenden Build-Prozessor 4 über ein Computerprogramm durchgeführt oder umgesetzt werden.

Das Bauteil 10 ist vorzugsweise eine kühlbare und im Betrieb zu kühlende Komponente des Heißgaspfades einer Strömungsmaschine, wie eine Turbinenschaufel, eine Hitzeschildkomponente einer Brennkammer und/oder eine Resonator- oder Dämpferkomponente, beispielsweise ein Helmholtz-Resonator.

Alternativ kann es sich bei dem Bauteil 10 um ein Ringsegment, ein Brennerteil oder eine Brennerspitze, eine Zarge, eine Schirmung, ein Hitzeschild, eine Düse, eine Dichtung, einen Filter, eine Mündung oder Lanze, einen Stempel oder einen Wirbler handeln, oder einen entsprechenden Übergang, Einsatz, oder ein entsprechendes Nachrüstteil.

Um Herstellungsanweisungen für den Aufbau des Bauteils (siehe weiter unten), beispielsweise ausgehend von einer vorgegebenen CAD-Geometrie des Bauteils umzusetzen, wird der genannte Build-Prozessor 4 oder eine entsprechende Schaltung vorgesehen, welche beispielsweise mit entsprechenden CAM-Informationen oder Herstellungsanweisungen programmiert werden kann und/oder die Bestrahlungsvorrichtung 2 entsprechend veranlassen kann, das Bauteil gemäß den weiter unten beschriebenen Herstellungsanweisungen schichtweise aufzubauen. Die Build-Prozessorschaltung 4 fungiert vorzugsweise als Schnittstelle zwischen der den eigentlichen Aufbauprozess vorbereitenden Software und der entsprechenden Hardware der Herstellungsanlage 100. Der Build-Prozessor kann dazu beispielsweise eingerichtet sein, ein Computerprogramm mit entsprechenden Herstellungsanweisungen, auszuführen.

Figur 2 zeigt konventionelle Materialaufbau- bzw. Bestrahlungsvektoren in der additiven Herstellung. Insbesondere beim pulverbett-basierten selektiven Laserschmelzen werden wie im linken Teil, a), der Darstellung mäanderförmige Vektoren oder Raster für den Materialaufbau verwendet. Alternativ können, wie in der mittleren Darstellung b) gezeigt, streifenartige Bestrahlungsvektoren v verwendet werden oder einzelne dieser Streifen auch mäanderförmig bestrahlt werden. In der rechten Darstellung c) ist ein schachbrettartiges Bestrahlungsmuster gezeigt. Jede der gezeigten Alternativen kann individuelle Vorteile, insbesondere hinsichtlich der Dosierung des lokalen Energieeintrag in das Pulverbett, haben. Über die dargestellte Art der Bestrahlung und einen entsprechenden Schraffurabstand der Vektoren v kann insbesondere die pro Zeit- und Flächeneinheit eingetragene Energie "dosiert" werden.

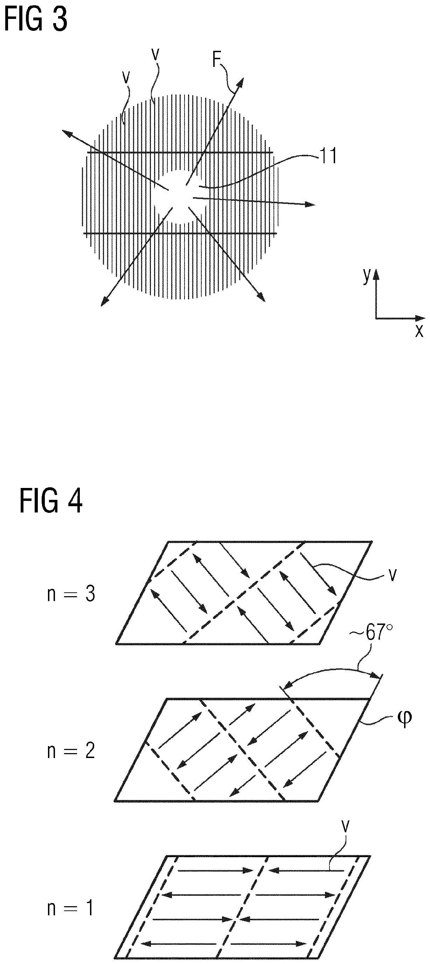

Die Figur 3 zeigt eine schematische Aufsicht auf eine (virtuelle) herzustellende Schicht bzw. lediglich ein dafür vorgesehenes Bestrahlungs- oder Aufbaumuster. Wie in der Aufsicht zu sehen, ist die Schicht bzw. das Bauteil rotationssymmetrisch bzw. weist eine zentrale Bohrung 11 auf. Die zentrale Bohrung 11 kann beispielsweise für eine Durchströmung des Bauteils in seinem Betrieb zur Kühlung oder für die Dämpfungseigenschaften vorgesehen sein. Die Dämpfungswirkung bei Helmholtz-Resonatoren wird dadurch bewirkt, dass eine Druckschwingung in der Brennkammer die Fluidmasse im zentralen Volumen periodisch auslenkt und damit zu Ausgleichsschwankungen zwingt. Eine Eigenfrequenz wird dabei zweckmäßigerweise auf die Pulsationsfrequenz der entsprechenden Verbrennungsinstabilität in der Turbinenbrennkammer abgestimmt. Für einen entsprechenden Kühl- und/oder Dämpfungseffekt können aber auch weitere Poren oder Kanäle in der Bauteilwandung erforderlich sein.

Eine Aufbau- oder Bestrahlungsstrategie gemäß der beschriebenen Verfahren ist hier analog zur Darstellung der Figur 2 (mittlerer Teil b), streifenartig, gezeigt. Diese Art der Bestrahlung führt allerdings inhärent zur Ausbildung von strukturellen Vorzugsrichtungen; insbesondere zu nicht rotationssymmetrischen Materialeigenschaften. Dies ist der abweichenden Materialaufbaustrategie geschuldet.

In Figur 4 wird anhand von drei aufeinanderfolgenden Bauteilschichten 1, 2 und 3 angedeutet, dass das entsprechend rechts gezeigte Muster von Vektoren v schichtweise verdreht oder variiert werden kann. Beispielsweise wurde ein Streifenmuster, wie in der unteren Schicht n=1 gezeigt, in der Schicht n=2 um einen Winkel ϕ von etwa 67° verdreht. Ausgehend von der Schicht 2 wurde die Streifenbestrahlung weiterhin beispielsweise um einen Winkel von 90° verdreht (vergleiche Schicht n=3). Solche Bestrahlungsstrategien sind bereits in konventionellen Herstellungsanlagen voreinstellbar und ermöglichen es, die Anisotropie oder Inhomogenität des aufgetragenen Materials durch die Vorzugsrichtung in der Aufbaustrategie zu reduzieren. Dies funktioniert allerdings nur unter großem Aufwand und nur zu einem gewissen Grad und erlaubt keine rotationssymmetrischen oder entsprechend vollständig homogenen Struktureigenschaften.

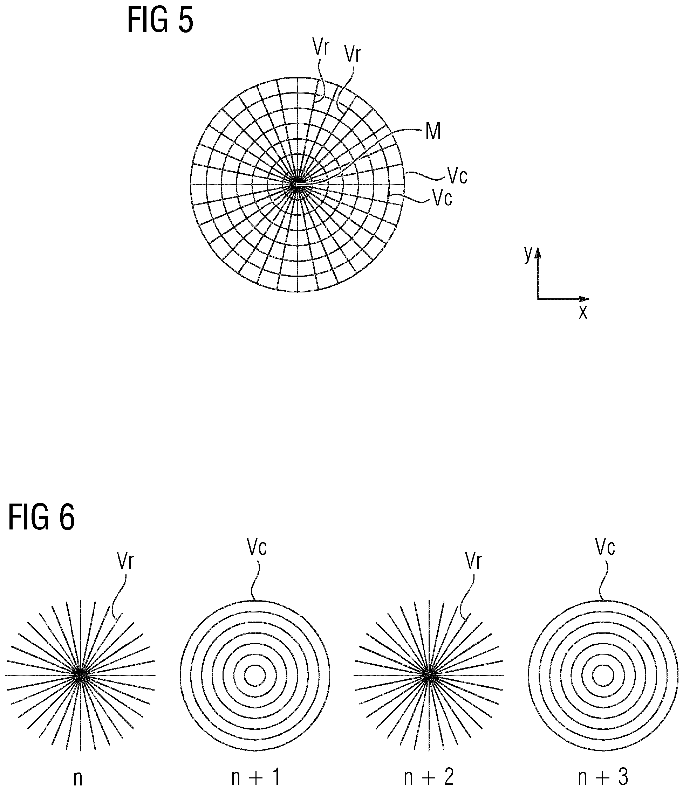

Figur 5 zeigt nun gemäß der vorliegenden Erfindung, dass radial verlaufende Aufbauvektoren Vr für eine jede additiv herzustellende Schicht (vgl. Bezugszeichen L oben) für das Bauteil 10 gemäß einem zumindest teilweise rotationssymmetrischen Muster definiert werden, und demgemäß auch entsprechend homogene oder symmetrische Materialeigenschaften hervorgerufen werden, die zumindest weitgehend invariant gegenüber der über einer Drehung des Bauteils um die Symmetrieachse sind. Zentrum des Bauteils ist ein Mittelpunkt M, zu welchem einzelne Aufbauvektoren Vr des Musters vorzugsweise konvergieren oder zusammenlaufen. Der Mittelpunkt muss beispielsweise bei einer Ausgestaltung des Herstellungsverfahrens als Pulverbettverfahren nicht zwangsläufig doppelt belichtet werden, sondern kann auch lediglich einmal punktweise belichtet werden.

Ein polarer Winkelabstand (vgl. Δϕ weiter unten) der Vektoren Vr kann beispielsweise ca. 10° betragen, oder mehr oder weniger.

Neben den radial verlaufenden Vektoren Vr sind weiterhin beispielhaft sieben koaxial verlaufende (äquidistante) Vektoren Vc eingezeichnet, welche weiter unten näher beschrieben werden (vgl. insbesondere Figur 6). Über dieses aus radialen und koaxialen Vektoren gekreuzte Aufbaumuster kann weiterhin eine sogenannte "cross-hatching" Bestrahlung- oder Aufbaustrategie verfolgt werden und dadurch poröse oder durchlässige Strukturen realisiert werden. Diese Eigenschaft kann beispielsweise für die Kühlung des Bauteils erforderlich sein. Dazu müssen die Abstände der beschriebenen Auftragsvektoren der gleichen Art bzw. Schicht vorzugsweise frei von Überlapp sein.

Um alternativ oder zusätzlich dazu eine definierte Durchströmung des Bauteils, beispielsweise in z-Richtung (Aufbaurichtung), zu bewirken, ist es weiterhin möglich, einen Polarwinkel von radial verlaufenden Vektoren oder bzw. einen Radius oder Durchmesser von koaxial (um den Mittelpunkt) verlaufenden Vektoren zu variieren, zu verdrehen oder zu versetzen.

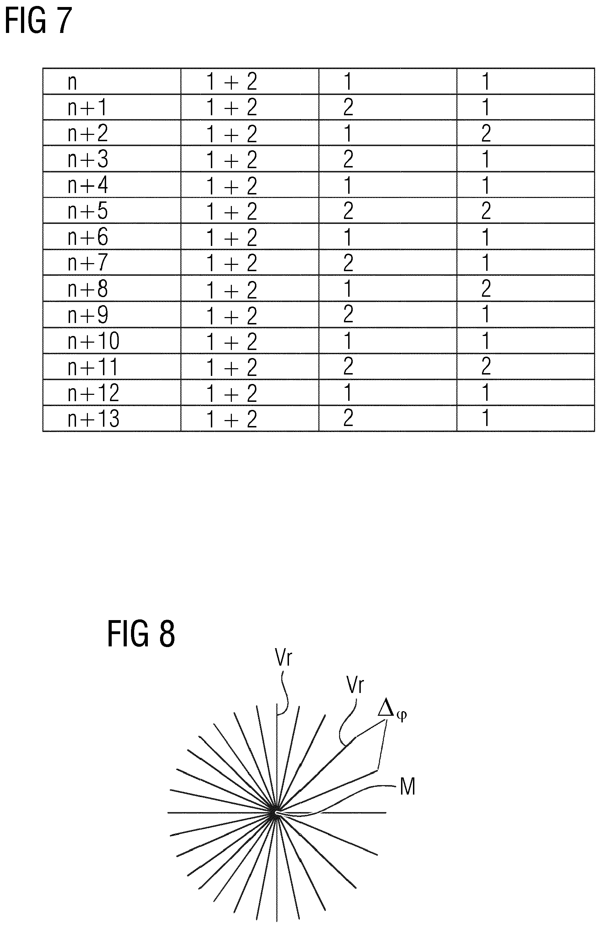

Figur 6 deutet ein Muster für Aufbauvektoren in vier beispielhaft aufeinanderfolgenden Schichten n, n+1, n+2 und n+3 für einen beliebigen Bereich des Bauteils 10 an. Es ist zu erkennen, dass für die Schicht n und n+2 lediglich beispielhaft radiale Vektoren Vr gekennzeichnet sind. Für die Schichten n+1 und n+3 sind hingegen lediglich koaxiale Vektoren Vc gekennzeichnet. Eine Bestrahlung oder ein Materialaufbau kann vorliegend also gemäß des durch diese Vektoren gebildeten Musters stattfinden. Anders als dargestellt, kann aber ebenso gut jede Schicht n mit kreuzweisen Vektoren ("cross hatching") versehen werden, und/oder eine alternierende Abfolge, sei es eine ausgewogene (vgl. zweite Spalte von rechts in Figur 7) oder eine unausgewogene Abfolge (vgl. ganz rechte Spalte in Figur 7), einer der beiden Vektoren vorgesehen werden.

Bezugnehmend auf die Figur 6 listet die Tabelle aus Figur 7 weiterhin (links) beliebige Schichten n bis n+13 des Bauteils 10 auf. Diesen Schichten n sind verschiedene Möglichkeiten der Schraffur- oder Aufbaureihenfolge zugeordnet, wobei die Ziffer 1 vorzugsweise radial verlaufende Vektoren Vr und die Ziffer 2 koaxial verlaufende Vektoren Vc bedeuten soll. Die zweite Spalte von links soll eine kreuzweise Schraffur bedeuten.

Demgemäß können also verschiedene Vektorarten auch innerhalb einer einzigen aufzubauenden Schicht realisiert werden (Doppelbelichtung) .

Figur 8 deutet anhand einer schematischen Aufsicht auf ein Aufbaumuster eine nicht (ganz) radialsymmetrische Ausgestaltung der vorliegenden Bestrahlung oder Aufbaustrategie mit radial verlaufenden Vektoren Vr an. Anders als oben beschrieben ist im linken Bereich des Musters ein Winkelabstand zwischen einzelnen radialen Vektoren Δϕ größer dargestellt als auf der linken Seite. Mit anderen Worten kann dieser Abstand beliebig um den Mittelpunkt M herum zu- und abnehmen, um zum Beispiel eine Vorzugsrichtung gezielt einzustellen. Demgemäß kann die beschriebene Rotationssymmetrie eingeschränkt, jedoch für bestimmte Winkel immer noch gegeben sein.

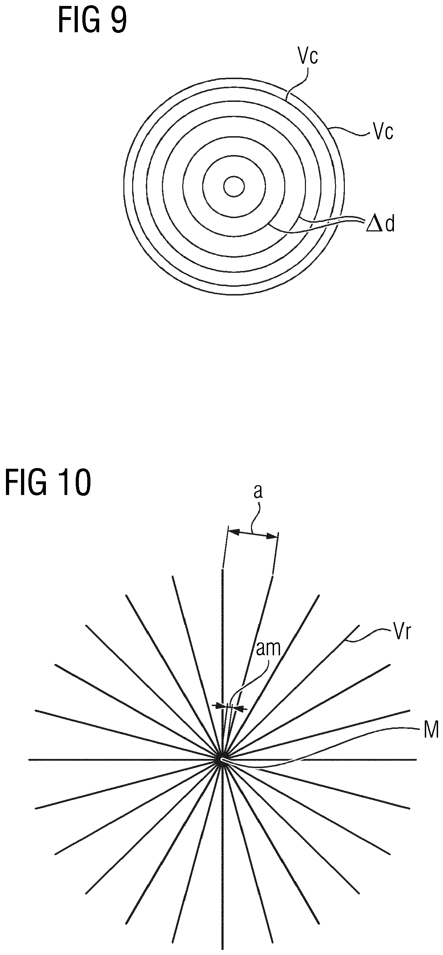

Figur 9 zeigt, dass - alternativ oder zusätzlich - ein radialer Abstand Δd von koaxial verlaufenden Vektoren Vc variiert werden kann. Mit anderen Worten kann außen oder innen in dem Muster über den Radius bzw. den Durchmesser der Vektoren Vc ein Schraffur- oder Dichtegradient eingestellt werden. Beispielsweise kann zunächst der Abstand zwischen den Kreisen zunehmen und dann wieder abnehmen, oder umgekehrt.

Gemäß den vorliegend beschriebenen Aufbaumustern, nach denen das Bauteil über entsprechende Herstellungsanweisungen zweckmäßig mit vorteilhaften Struktureigenschaften ausgestattet werden kann, kann der Mittelpunkt für alle Schichten entlang der Aufbaurichtung (senkrecht zur Darstellungsebene) unverändert sein (konstante kartesische x-y Koordinaten) oder vertikal entlang z wandern - z.B. immer auf den Schwerpunkt oder Flächenschwerpunkt der zu belichtenden Fläche in jeder Schicht L. Vorgegeben werden kann beispielsweise auch ein Maximalabstand in x-y-Richtung zwischen den zu wählenden Mittelpunkten von aufeinanderfolgenden Schichten n. Solch ein maximaler lateraler Abstand kann beispielsweise zwischen 20 µm und 60 µm, insbesondere 40 µm, oder der Schichtdicke L entsprechen. Dadurch kann beispielsweise ein struktureller Zusammenhalt der aufgebauten Struktur mit Vorteil gewährleistet werden.

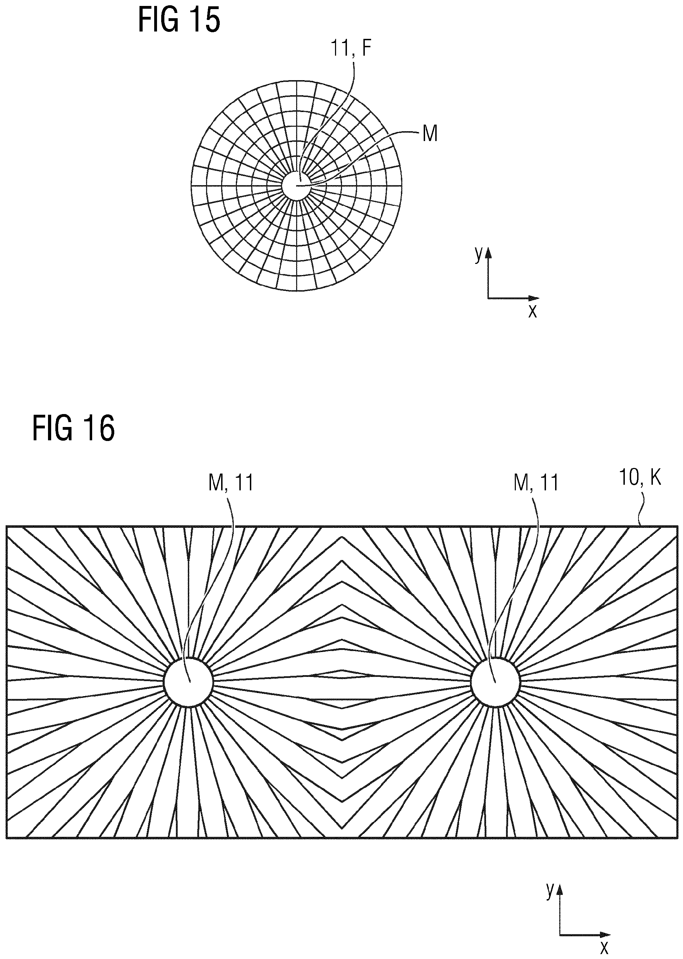

Wie in Figur 10 angedeutet, kann vorliegend aus diesem Grund auch ein minimaler Abstand am (vgl. innen) als auch ein maximaler Abstand a (vgl. außen) von beispielsweise radial verlaufenden Vektoren Vr definiert werden. Dies ist insbesondere zweckmäßig, um einen bestimmten Dichtewert der Struktur nicht zu unterschreiten, oder eine Porosität der Struktur, beispielsweise weiter außen, nicht zu überschreiten. Auch kann so vorteilhafterweise Überhitzung oder zu häufiges Umschmelzen im Mittelpunkt mit Vorteil vermieden werden. Im Falle von Schmelzschichtungs- oder Auftragschweißverfahren kann so auch vorteilhafterweise eine übermäßige Materialanhäufung im Zentrum verhindert werden (vergleiche auch Figur 15 weiter unten) .

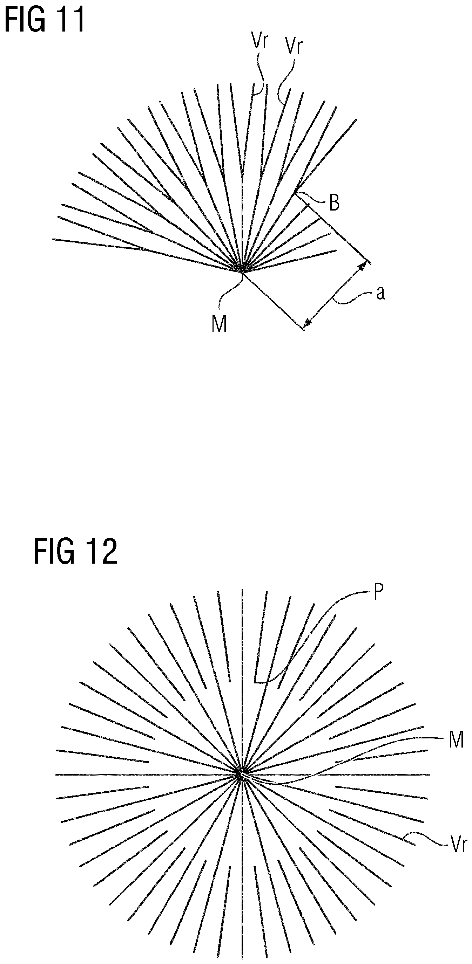

Figur 11 zeigt analog zu einigen der vorhergehenden Darstellungen einen Sektor eines Aufbaumusters, wobei Aufbauvektoren Vr mit zunehmendem radialen Abstand vom Mittelpunkt M verzweigt werden, wenn ein vordefinierter, maximaler Abstand a benachbarter Vektoren überschritten wird, sodass jeder verzweigte Ast des Musters beispielsweise eine Rotationssymmetrie aufweist.

In Figur 12 ist eine Ausführungsform gezeigt, wobei nur eine vorbestimmte Anzahl von Verfestigungsvektoren Vr durch den Mittelpunkt M verläuft und die restlichen Vektoren in einer regelmäßigen Anordnung erst radial weiter außen einsetzen, um einen geeigneten Abstand der Aufbauvektoren Vr, Vc einzuhalten. Obwohl diese Ausgestaltung ebenfalls, beispielsweise weiter außen, Verzweigungen aufweisen kann, ist dies (im Inneren) nicht zu erkennen. Mit anderen Worten können so zusätzliche radiale Vektoren als Zwischenvektoren hinzugefügt werden, die ebenfalls bewirken, dass eine ausreichende oder optimale Dichte von Vektoren für das Strukturergebnis des Bauteils 10 erzielt wird.

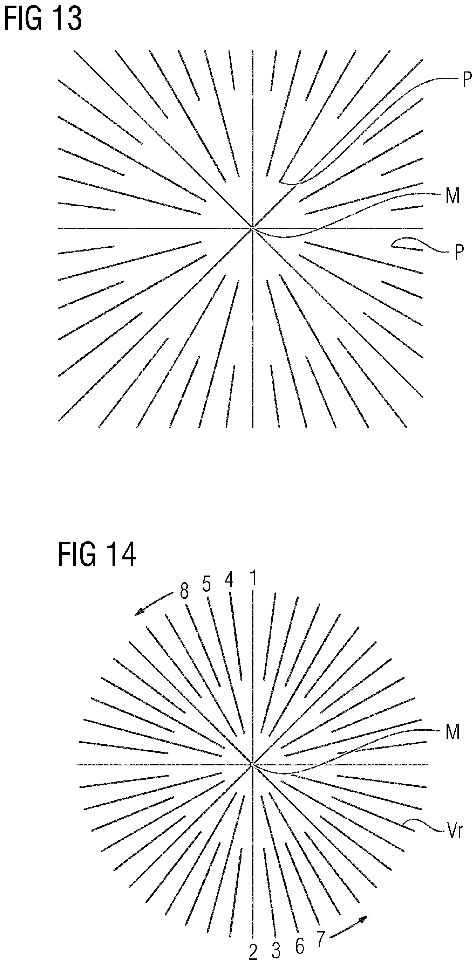

Gemäß der Darstellung der Figur 13 verläuft ähnlich nur eine bestimmte Anzahl an Vektoren durch das Zentrum (z.B. acht Vektoren). Die übrigen setzen radial nach außen hin gestaffelt, erst in den Punkten P ein, um den Mindestabstand einzuhalten.

Alternativ oder zusätzlich zu den beschriebenen Ausgestaltungen kann ein Energieeintrag, beispielsweise eine Leistung für eine Materialverfestigung gemäß den Vektoren Vr, Vc vom Mittelpunkt M radial nach außen erhöht werden, um breitere Materialaufträge zu erzielen.

Figur 14 deutet schematisch eine Rasterabfolge der radial verlaufenden Vektoren Vr in dem beschriebenen Aufbaumuster an. Die Punkte gemäß den Ziffern 1, 2, 3, 4, 5, 6, 7 und 8 werden nacheinander abgefahren. Vorteilhaft ist es dabei, ein Springen oder eine Diskontinuität eines entsprechenden Bestrahlungslasers, oder - für den Fall, dass ein Materialauftragsverfahren angewendet wird - eines Materialauftrags, zu vermeiden.

Im Falle von pulverbett-basierten Strahlverfahren hat das Springen des Lasers den Nachteil, dass eine entsprechende Trägheit der Strahlablenkungsoptik zu einem insgesamt langsameren Aufbauprozess führt. Daher wird das gezeigte Muster vorteilhafterweise zuerst vom Punkt 1 bis zum Punkt 2 (ohne Unterbrechung) abgerastert. Die entsprechenden Vektoren sind durchgängig und erstrecken sich diametral durch das ganze Muster.

Anschließend wird vorzugsweise ein zweiter Bereich zwischen den Punkten 3 und 4 abgerastert, wobei der Vektor im Mittelpunkt M unterbrochen oder ein entsprechender Laser dort ausgeschaltet wird. Eine entsprechende Führungsoptik fährt dabei aber vorteilhafterweise den gesamten Vektor ab. Der Laser oder Elektronenstrahl wird nach dem Mittelpunkt M wieder angeschaltet. In der gleichen Art erfolgt dann auch die Bestrahlung des Musters zum Punkt 5, 6, 7 und 8 usw.. Ohne Beschränkung der Allgemeinheit kann dies aufgrund der Symmetrie entweder im Uhrzeigersinn oder im Gegenuhrzeigersinn passieren. Bei Herstellungsanlagen mit einer Mehrzahl von Laserstrahlen oder Auftragsdüsen, könnte das gezeigte Muster auch entsprechend um 90° oder 180° versetzt bestrahlt werden, und zusätzlich zeitversetzt, um beispielsweise nicht gleichzeitig den Mittelpunkt zu kreuzen.

Alternativ oder zusätzlich könnten mehrere Bearbeitungsköpfe auch um einzelne Vektoren in Umfangsrichtung versetzt arbeiten, beispielsweise so, dass ein Werkzeug mit dem Vektor von Punkt 1 zu 2 gestartet wird, und ein zweiter Vektor zunächst vom 3 zum Punkt 4 bewegt wird. Danach springt beispielsweise das erste Werkzeug zum Vektor 6 und rastert weiter zum Punkt 5, und das zweite Werkzeug verfährt zum Punkt 8 und rastert weiter zu Punkt 7.

Die Figur 15 zeigt ein rotationssymmetrisches Aufbaumuster, welches im Mittelpunkt M ausgespart ist. Dies kann einer zentralen Öffnung oder Bohrung des fertig herzustellenden Bauteils 10 (siehe oben) geschuldet sein. Wie oben angedeutet, kann natürlich eine Rasterung des Musters im Mittelpunkt ohne weiteres ausgespart werden. Beispielsweise Resonatorkomponenten eines Gasturbinen-Heißgaspfades, wie Helmholtz-Resonatoren oder andere dämpfende und kühlbare Bauteile können entsprechend aufgebaut werden. Insbesondere für das Erfordernis, das genannte Bauteil mit rotationsinvarianten Eigenschaften, beispielsweise einer umlaufend homogenen Durchlässigkeit für ein Kühlfluid, auszustatten, ist die gezeigte Strategie für den Materialaufbau vorteilhaft.

Gemäß der Ausgestaltung des Musters aus der Figur 16, kann beispielsweise das Bauteil 10, wie oben beschrieben, lediglich als Bauteilbereich angesehen werden und ein (Gesamt-)Bauteil eine Mehrzahl von rotationssymmetrischen Strukturbereichen aufweisen. Demgemäß weist die Darstellung einer Bauteilschicht bzw. seiner selektiven Bestrahlung oder seines Materialaufbaus zwei voneinander beabstandete Punkte M auf, wo jeweils beispielsweise eine Bohrung oder ein Durchgangsloch im Design des Bauteils vorgesehen ist. Innen und außen ist eine Kontur K der jeweiligen Bauteilschicht als Rand des Musters dargestellt.

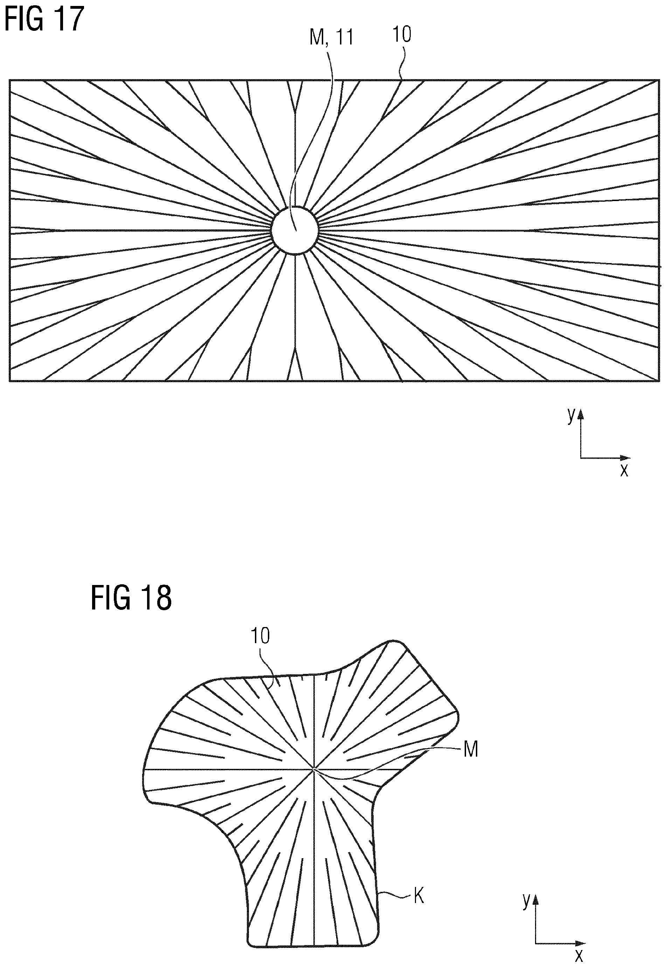

Gemäß der Ausgestaltung der Figur 17, kann das genannte Aufbaumuster auch von einer strengen radialen Symmetrie abweichen und beispielsweise nur relativ zu bestimmten Rotationswinkeln symmetrisch sein. Demgemäß kann das Muster also gestreckt oder verzerrt werden, beispielsweise um individuell an eine Querschnittsfläche einer Bauteilschicht angepasst zu werden. Dabei ist möglicherweise wie oben beschrieben, eine minimale und/oder maximale Beabstandung der Vektoren Vr einzuhalten (der Einfachheit halber sind lediglich radiale Vektoren dargestellt, wobei mit dieser Ausgestaltung selbstverständlich ebenfalls (verzerrte) konzentrische Vektoren Vc vorgesehen sein können).

Alternativ oder zusätzlich dazu kann (wie angedeutet) eine Verzweigung der Vektoren im äußeren Bereich stattfinden. Weiterhin können (pro Vektor) mehr als zwei Verzweigungen in gestreckten Bereichen und beispielsweise keine Verzweigung in gestauchten Bereichen vorgesehen sein.

Gemäß der in der Figur 18 gezeigten Ausgestaltung ist das Aufbaumuster ebenfalls nicht vollständig radialsymmetrisch, sondern einzelne Aufbauvektoren Vr sind - beispielsweise gemäß einer Kontur K der jeweils herzustellenden Bauteilschicht L - unterschiedlich lang bis zu der Bauteilkontur K ausgedehnt. Auf diese Weise können beliebige Bauteilquerschnittflächen zweckmäßig gerastert und damit auf additivem Wege realisiert werden.

## Patentansprüche

1. Verfahren zum Bereitstellen von Herstellungsanweisungen für die additive Herstellung eines Bauteils (10), wobei Aufbauvektoren (Vr, Vc) für eine additiv herzustellende Schicht (L) für das Bauteil (10) ein zumindest teilweise rotationssymmetrisches Muster bildend definiert werden, und wobei einzelne Aufbauvektoren (Vr) des Musters radial verlaufen und zu einem gemeinsamen Mittelpunkt (M) konvergieren.

2. Verfahren gemäß Anspruch 1, wobei Aufbauvektoren (Vr) mit zunehmendem radialen Abstand vom Mittelpunkt (M) verzweigt werden, wenn ein vordefinierter, maximaler Abstand (a) benachbarter Vektoren überschritten wird.

3. Verfahren gemäß Anspruch 1 oder 2, wobei nur eine vorbestimmte Anzahl von Verfestigungsvektoren (Vr) durch den Mittelpunkt (M) verläuft und die restlichen Vektoren in einer regelmäßigen Anordnung radial weiter außen einsetzen, um einen geeigneten Abstand der Aufbauvektoren (Vr, Vc) einzuhalten.

4. Verfahren gemäß einem der vorhergehenden Ansprüche, wobei eine Geometrie des additiv herzustellenden Bauteils (10) derart gewählt wird, dass der Mittelpunkt (M) des Musters innerhalb eines nicht zu verfestigenden Bereichs, beispielsweise einer Bohrung (11), des Bauteils (10) liegt.

5. Verfahren gemäß einem der vorhergehenden Ansprüche, wobei das Muster nicht vollständig radialsymmetrisch ausgebildet wird, in dem einzelne Aufbauvektoren (Vr, Vc), beispielsweise gemäß einer Kontur (K) der jeweils herzustellenden Bauteilschicht (L), unterschiedlich lang ausgedehnt werden.

6. Verfahren gemäß einem der vorhergehenden Ansprüche, wobei ein Energieeintrag (P) für eine Materialverfestigung gemäß den Vektoren (Vr, Vc) vom Mittelpunkt (M) radial nach außen erhöht wird, um breitere Materialaufträge zu erzielen.

7. Verfahren gemäß einem der vorhergehenden Ansprüche, wobei das Muster im Rahmen eines CAM-Verfahren definiert wird.

8. Verfahren gemäß einem der vorhergehenden Ansprüche, wobei die Aufbauvektoren (Vr, Vc) derart definiert werden, dass gemäß diesen aufgebaute Materialauftragsbahnen in der Schicht (L) frei von Überlapp sind, um im fertigen Bauteil (10) eine gezielte Porosität, insbesondere Permeabilität für ein Kühlfluid (F), zu bewirken.

9. Verfahren gemäß einem der vorhergehenden Ansprüche, wobei für eine weitere, auf die genannte Schicht (L, n) folgende, Bauteilschicht (L, n+1) weitere Aufbauvektoren (Vr, Vc) definiert werden (V3), welche relativ zu denen der darunterliegenden Schicht verdreht (ϕ) und/oder radial versetzt (d) werden.

10. Verfahren gemäß einem der vorhergehenden Ansprüche, wobei für eine weitere, auf die genannte Schicht folgende, Bauteilschicht (L, n+1) weitere Aufbauvektoren (Vc) definiert werden, welche konzentrisch verlaufen und die Aufbauvektoren (Vr, Vc) der darunterliegenden Schicht (L, n) kreuzen.

11. Verfahren zur Herstellung des Bauteils (10), wobei die Vektoren (Vr, Vc) Bestrahlungsvektoren sind, wobei das Muster nach einem der vorhergehenden Ansprüche für alle Schichten (Ln) des Bauteils (10) entsprechend seiner Geometrie definiert wird und das Bauteil (10) anschließend entsprechend durch ein pulverbett-basiertes additives Herstellungsverfahren, insbesondere selektives Laserschmelzen oder Elektronenstrahlschmelzen, aufgebaut wird.

12. Verfahren zur Herstellung des Bauteils (10), wobei die Vektoren (Vr, Vc) Auftragsvektoren sind, wobei das Muster nach einem der vorhergehenden Ansprüche für alle Schichten (Ln) des Bauteils (10) entsprechend seiner Geometrie definiert wird und das Bauteil (10) anschließend entsprechend durch ein Auftragschweißverfahren oder ein Schmelzschichtungsverfahren aufgebaut wird.

13. Bauteil (10), welches gemäß dem Verfahren nach einem der vorhergehenden Ansprüche herstellbar oder hergestellt ist, wobei das Bauteil (10) für den Einsatz im Heißgaspfad einer Gasturbine vorgesehen ist, insbesondere als Resonator- bzw. Dämpferbauteil.

14. Bauteil (10) gemäß Anspruch 13, wobei das Bauteil (10) eine zu kühlende Komponente des Heißgaspfades einer Strömungsmaschine, wie einer stationären Gasturbine ist, und wobei eine Struktur des Bauteils entlang einer Durchströmungsrichtung (F) für die Kühlung, die genannte Richtung umlaufend, invariante Permeabilitätseigenschaften aufweist.

15. Computerprogrammprodukt (CPP), umfassend Befehle, die bei der Ausführung eines entsprechenden Programms durch einen Computer (4), beispielsweise zur Steuerung der Bestrahlung oder des Materialauftrags in einer additiven Herstellungsanlage (100), diesen veranlassen, die Vektoren und das Muster nach einem der Ansprüche 1 bis 10 zu definieren.
